# EUROPEAN PATENT APPLICATION

(11) **EP 2 387 905 A2**
(43) Date of publication of application: **23.11.2011**
(21) Application number: 11250287.7
(22) Date of filing: 10.03.2011
(51) Int. Cl.: A44C 5/20, F16B 45/02

(54) **A buckle**

(30) Priority: 19.05.2010 CN 201010191984
(71) Applicant: Dongguan Garbo Limited, Jinhe Industrial District Zhangmutou Town, Dongguan City Guangdong (CN)
(72) Inventor: Peline, Michel René Gilles Paul, Hong kong (HK)
(74) Representative: Hardy, Rosemary

(57) **Abstract**

A buckle (100) is disclosed as including a body (102) and a finger (104), in which the finger (104) is pivotally movable relative to the body (102) about an axis (D-D) between a closed position in which the body (102) and the finger (104) form a closed ring and an open position in which the ring is open, and the finger (104) includes a recess (112) containing a compression spring (116), and the finger (104) is biased towards the closed position, further including an engagement member (118) with a shoulder portion (138) and an extension portion (140), in which the shoulder portion (138) of the engagement member (118) engages the body (102), and the extension portion (140) of the engagement member (118) is received within a cavity of the spring (116).

## Description

This invention relates to a buckle, and in particular such a buckle with a spring-biased closing mechanism.

There are in existence various kinds of buckles, e.g. miniature buckles, with one-way spring-biased return/closing mechanisms. Such buckles may be used in key rings, backpacks, or in mountaineering. Some such buckles are intended for repeated use (opening and closing), and thus require the spring-biased return/closing mechanism to be able to withstand such repeated use, e.g. over 20,000 times of opening and closing, without compromising its return/closing capability and elasticity.

Most existing buckles (in particular miniature buckles) cannot fulfill this requirement, as the elasticity of the spring in the buckles will weaken upon use, thus compromising its return/closing function, and reducing the product life.

It is thus an object of the present invention to provide a buckle in which the aforesaid shortcoming is mitigated, or at least to provide a useful alternative to the public.

According to the present invention, there is provided a buckle including a body member, and a closing member, wherein said closing member is pivotally movable relative to said body member about a first axis between a closed position in which said body member and said closing member form a closed ring and an open position in which said ring is open, wherein said closing member includes a recess containing a spring, and wherein said closing member is biased towards said closed position, characterized in including an engagement member with a first portion and a second portion, wherein said first portion of said engagement member engages said body member, and wherein said second portion of said engagement member is received within a cavity of said spring

Embodiments of the present invention will now be described, by way of examples only, with reference to the accompanying drawings, in which:
Fig. 1 is a partly-sectioned front view of a buckle according to a first embodiment of the present invention in a ring-closed configuration;
Fig. 2 is a partly-sectioned view of the buckle of Fig. 1 in a ring-open configuration;
Fig. 3 is a front view of a body of the buckle of Fig. 1;
Fig. 4 is a right side view of the body of Fig. 3;
Fig. 5 is a sectional view taken along the line A-A of Fig. 4;
Fig. 6 is a front view of a finger of the buckle of Fig. 1;
Fig. 7 is a right side view of the finger of Fig, 6;
Fig. 8 is a sectional view taken along the line B-B of Fig. 7;
Fig. 9 is a front view of an engagement member of the buckle of Fig. 1;
Fig. 10 is a bottom view of the engagement member of Fig. 9;
Fig. 11 is a bottom perspective view of the engagement member of Fig. 9;

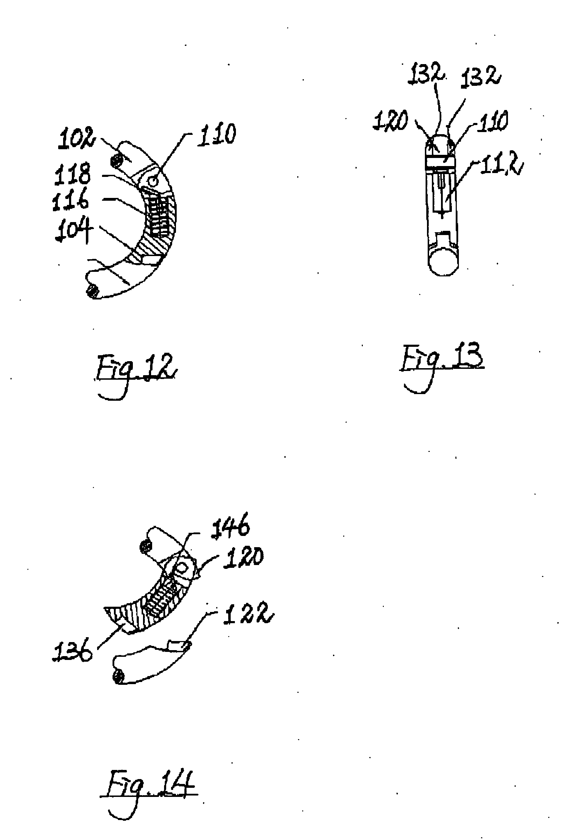

Fig. 12 is a partial partly-sectioned view of the buckle of Fig. 1 in a ring-closed configuration;
Fig. 13 is a right side view of the buckle of Fig. 12, with the spring removed;
Fig. 14 is a partial partly-sectioned view of the buckle of Fig. 12 in a ring-op an configuration;
Fig. 15 is a front view of a buckle according to a second embodiment of the present invention;
Fig. 16 is a front view of a buckle according to a third embodiment of the present invention;
Fig. 17 is a front view of a buckle according to a fourth embodiment of the present invention;
Fig. 18 is a front view of a buckle according to a fifth embodiment of the present invention;; and
Fig. 19 is a front view of a buckle according to a sixth embodiment of the present invention.

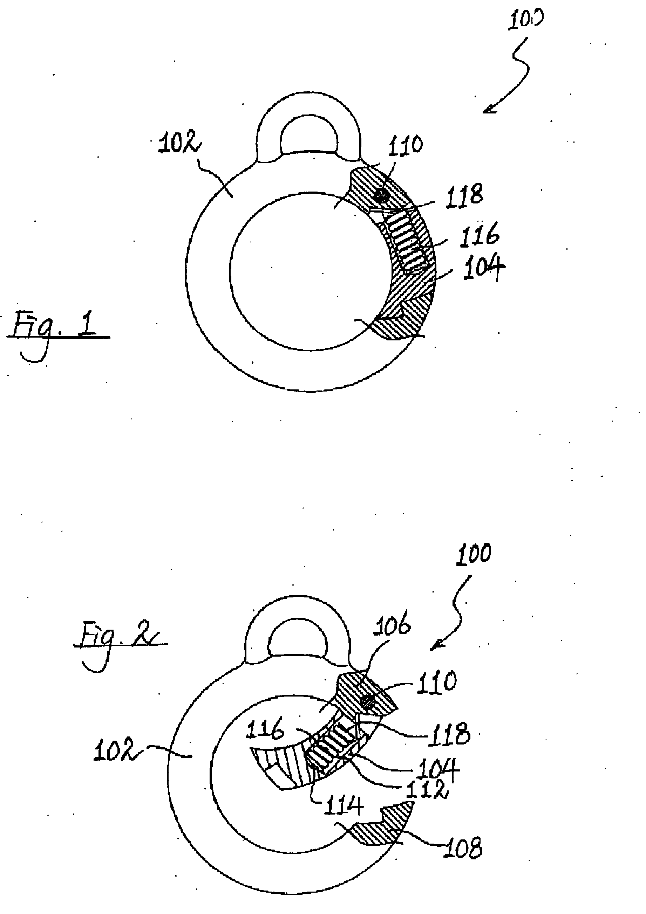

A miniature buckle according to a first embodiment of the present invention is shown in Figs. 1 and 2, generally designated as 100. The buckle 100 has a body 102 and an arc-shaped finger 104. The body 102 is in a generally C shape with a first open end 106 and a second open end 108. The finger 104 acts as a one-way return/closing mechanism. In particular, the finger 104 is pivotally engaged with the first open end 106 of the body 102 via a rivet 110 so that the finger 104 is pivotally movable relative to the body 102 about an axis which coincides with the longitudinal axis of the rivet 110. This axis is perpendicular to the plane of the body 102, and thus of the buckle 100. The finger 104 is thus pivotally movable relative to the body 102 about the axis between a position in which the finger 104 and the body 102 form a closed ring (as shown in Fig. 1) and a position in which the ring is open (as shown in Fig. 2).

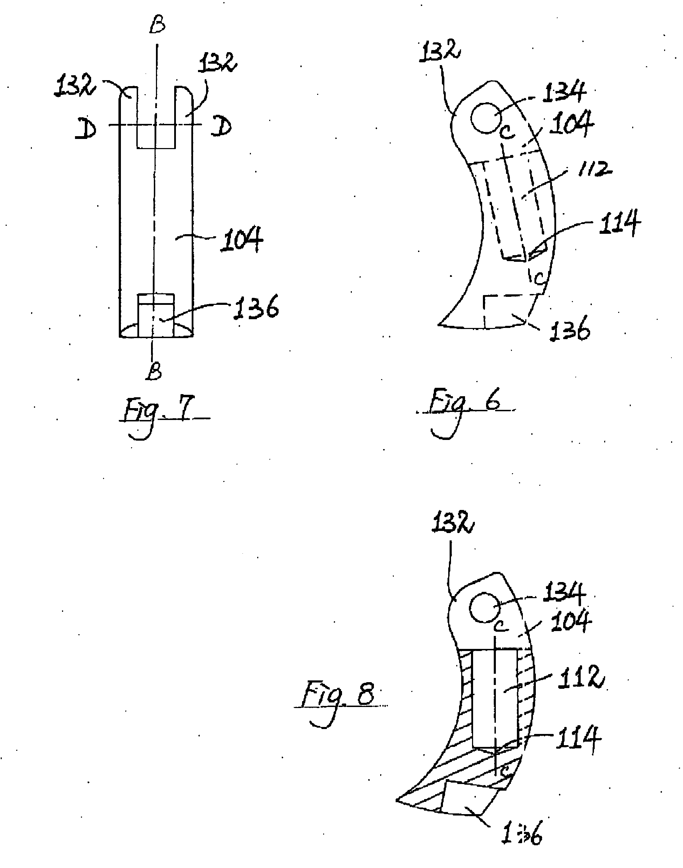

The finger 104 has an elongate recess 112 with a bottom end 114 within which a compression spring 116 is received. The longitudinal axis (C-C) of the recess 112 (see Figs. 6 and 8) is perpendicular to axis D-D (see Fig. 7) about which the finger 104 is pivotally movable relative to the body 102.

It is arranged such that when the buckle 100 is in the closed configuration (as shown in Fig. 1), the length (H₁) of the compression spring 116 is shorter than the normal length (H₀) of the compression spring 116, i.e. when the spring 116 is neither stretched nor compressed. The compression spring 116 is thus already compressed relative to its normal length (H₀) when installed within the elongate recess 112. In addition, when the buckle 100 is in the open configuration (as shown in Fig. 2), the length (H₂) of the compression spring 116 is shorter than its length (H₁) when the buckle is in the closed configuration.

As an example, the normal length H₀ of the compression spring 116 is 5.2mm, the length H₁ of the compression spring 116 when the buckle 100 is in the closed configuration is 3.7mm, and the length H₂ of the compression spring 116 when the buckle 100 is in the open configuration is 3.1mm. Provided that these dimensions are all within the range of elasticity of the spring 116, such an arrangement allows the spring 116 to provide a linger return force to bias the finger 104 back to the normal, closed position.

The buckle 100 also includes an engagement member 118, the structure and function of which will be further discussed below.

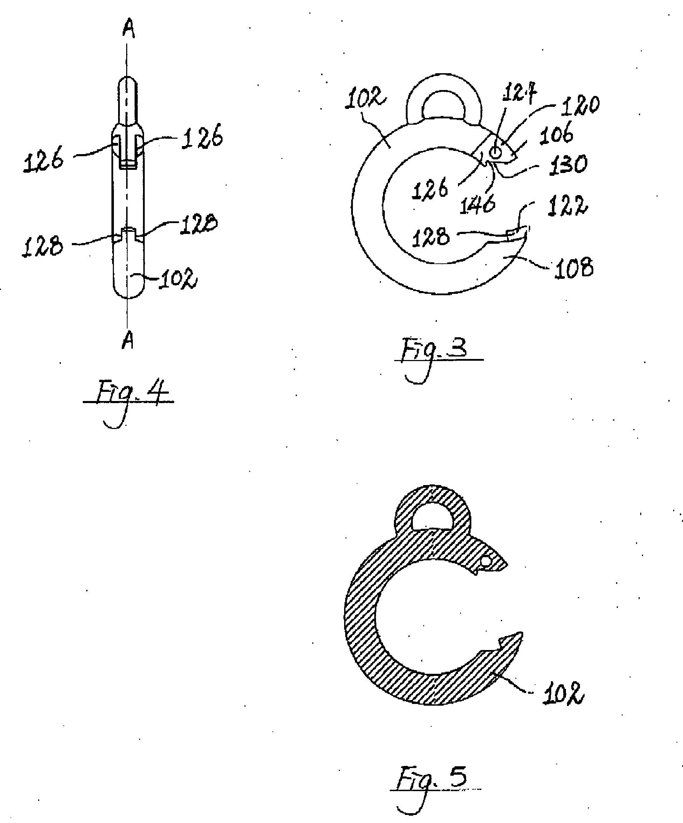

As shown more clearly in Figs. 3 to 5, in the body 102, a first protrusion 120 is provided at its first open end 106, and a second protrusion 122 is provided at its second open end 108. A hole 124 is provided through the first protrusion 120 of the first open end 106 of the body 102, and the longitudinal axis of the hole 124 is perpendicular to the plane of the body 102.

The first protrusion 120 has two surfaces 126 which are parallel to each other and to the plane of the body 102. Similarly, the second protrusion 122 has two surfaces 128 which are parallel to each other and to the plane of the body 102. It can also be seen from Fig. 3 that at the extreme end 130 of the first protrusion 120 is a recess 146, the function of which will be discussed below.

Turning to Figs. 6 to 8, at a first end of the finger 104 is a pair of ear plates 132 which are spaced apart from and parallel to each other. Each ear plate 132 has a hole 134 and these two holes 134 have a common axis D-D. When the finger 104 is installed with the body 102, the first protrusion 120 of the body 102 is received in the space between the two ear plates 132 such that the hole 124 of the first protrusion 120 is aligned with the two holes 134 of the car plates 132 such that the holes 124, 134 are ∞-axial with one another. The rivet 110 is then received within and engaged with the holes 124, 134, whereupon the finger 104 (as well as the ear plates 132) is pivotable relative to the first protrusion 120 of the body 102 about the axis D-D, and about the rivet 110.

At an opposite second end of the finger 104 is a recess 136 which, when the finger 104 is installed with the body 102 and is in the closed position, receives the second protrusion 122 of the second open end 108 of the body 102.

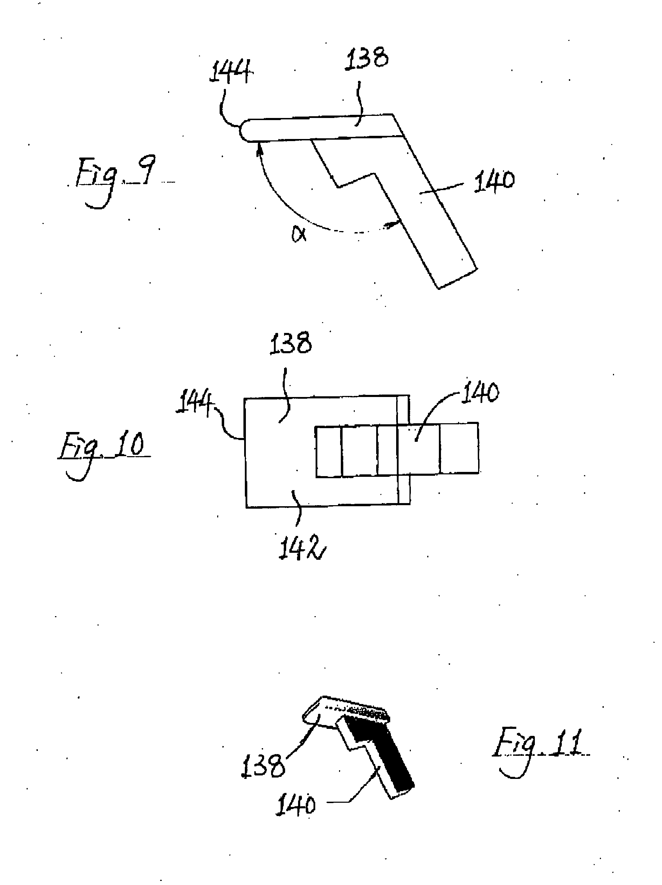

Figs. 8 to 11 show various views of the engagement member 118 of the buckle 100. The engagement member 118 has a generally L-shaped cross section, and has a shoulder portion 138 and an extension portion 140 fixedly joined with each other The shoulder portion 138 is a rectangular block, and is slanted relative to the extension portion 140. The angle α between the shoulder portion 138 and the extension portion 140 is such that 90° ≤ α ≤ 175°. It can also be seen that the extension portion 140 is joined at an end of an undersurface 142 of the shoulder portion 138, such that the shoulder portion 138 has a free end 144.

When duly assembled, the tree end 144 of the shoulder portion 13 8 abuts and acts against the recess 146 of the first protrusion 120 of the body 102. As to the extension portion 140, such is received within the internal cavity of the compression spring 116 received within the elongate recess 112 of the finger 104. The engagement member 118, in particular the extension portion 1.40, serves as a seat for the compression spring 116.

As discussed above, when the spring 116 is installed within the recess 112 of the finger 104, it is already pre-loaded, i.e. compressed to a length H₁ which is shorter than its normal length H₀. When the finger 104 is pivotally moved relative to the body 102 about the axis D-D, this will bring about pivotal movement of the engagement member 118 and the spring 116, but with the free end 144 of the shoulder portion 138 of the engagement member 118 as the centre of pivoting movement. This is similar to the situation where the extension portion 140 is in a lying state when the finger 104 is in the closed position, and the extension portion 140 stands up when the finger 104 is moved to the open position. The compression spring 116 is thus compressed again to the length H₂ when it is moved from the closed position to the open position. This twice compression of the spring 116 provides a larger return/closing/biasing force, and it is found in tests done on the buckle 100 that the finger 104 can close and open for over 20,000 times at an opening/closing frequency of 80 cycles per minute.

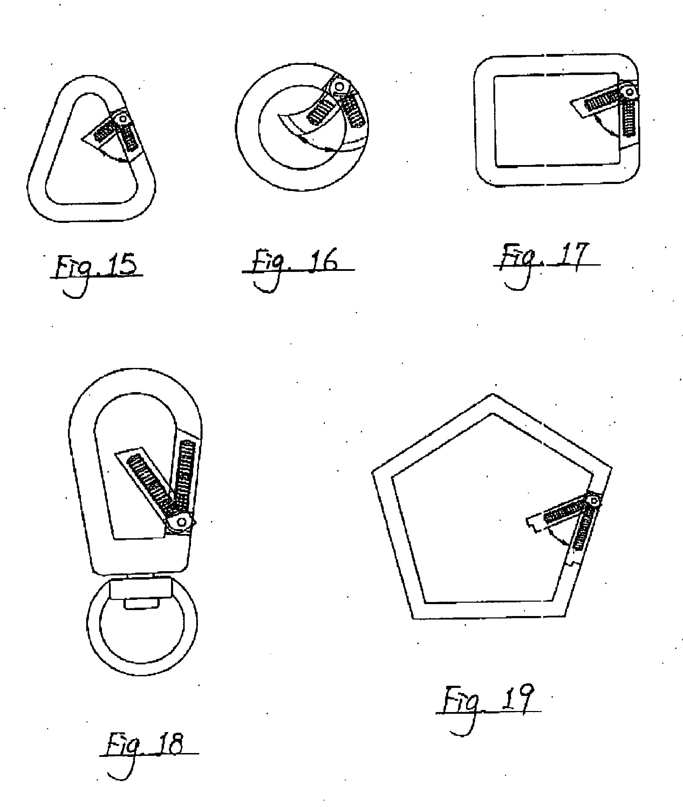

It should be understood that the above only illustrates examples whereby the present invention may be carried out, and that various modification and/or alterations may be made thereto without departing from the spirit of the invention. For example, Figs. 15 to 19 show various buckles using the same return/closing mechanism as discussed above. In the closed configuration, the buckle may be triangular, circular, rectangular, pentagonal and other shapes. Various other components, e.g. a key ring, a torch, or a nail clipper, may be attached to the buckle as desired.

It should also be understood that certain features of the invention, which are, for clarity, described in the context of separate embodiment, may be provided in combination in a single embodiment. Conversely various features of the invention which are, for brevity, described in the context of a single embodiment, may also be provided separately or in any appropriate sub-combinations.

## Claims

1. A buckle (100) including:
a body member (102), and
a closing member (104),
wherein said closing member is pivotally movable relative to said body member about a first axis (D-D) between a closed position in which said body member and said closing member form a closed ring and an open position in which said ring is open,
wherein said closing member includes a first recess (112) containing a spring (116), and
wherein said closing member is biased towards said closed position,
**characterized in** including an engagement member (118) with a first portion (138) and a second portion (140), wherein said first portion of said engagement member engages said body member, and wherein said second portion of said engagement member is received within a cavity of said spring.

2. A buckle according to Claim 1 further **characterised in that** said spring in said first recess of said closing member is compressed relative to its normal length (H₀).

3. A buckle according to Claim 1 or 2 further **characterized in that** the length (H₁) of said spring when said closing member is in said closed position is longer than the length (H₂) of said spring when said closing member is in said open position.

4. A buckle according to any of the preceding claims further **characterized in that** said engagement member has a generally L-shaped cross-section.

5. A buckle according to any of the preceding claims further **characterized in that** said engagement member includes a shoulder portion (138) and an extension portion (140).

6. A buckle according to Claim 5 further **characterized in that** said shoulder portion and said extension portion are inclined relative to each other by an angle (α) of not less than 90° and not more than 175°.

7. A buckle according to Claim 5 or 6 further **characterized in that** said shoulder portion is a rectangular block.

8. A buckle according to any of the preceding claims further **characterized in:**
**that** said body member is in the shape of an open ring with at least a first open end (106),
**that** said closing-member is generally arc-shaped and with a first end,
**that** said first end of said closing member is pivotally engaged with said first open end of said body member,
**that** said first open end of said body member includes a first protrusion (120) with two surfaces (126) parallel to a plane of said body member,
**that** said first protrusion has a hole (124) with a longitudinal axis substantially parallel to said first axis,
**that** said first end of said closing member includes a pair of ear plates (132),
**that** each said ear plate includes a hole (134),
**that** said holes of said ear plates are co-axial,
**that** said first recess has a longitudinal axis (C-C) substantially perpendicular to said first axis,
**that** said ear plates of said first end of said closing member are pivotally engaged with said first protrusion of said body member,
**that** said second portion of said engagement member is received within a cavity of said first recess, and
**that** said first portion of said engagement member abuts a second recess (146) of said first protrusion of said body member.

9. A buckle according to Claim 8 further **characterized in:**
**that** said body member includes a second open end (108) with a second protrusion (122), said second protrusion having two surfaces (128) substantially parallel to said plane of said body member and
**that** said closing has a second end with a third recess (136) for receiving said second protrusion when said closing member is in said closed position.
